# EUROPEAN PATENT APPLICATION

(11) **EP 2 554 799 A2**
(43) Date of publication of application: **06.02.2013**
(21) Application number: 12178566.1
(22) Date of filing: 30.07.2012
(51) Int. Cl.: F01D 19/00, F01D 15/10

(54) **Gas turbine start architecture and a method for starting such a turbine**

(30) Priority: 01.08.2011 US 201113195223
(71) Applicant: Hamilton Sundstrand Corporation, Windsor Locks, CT 06096-1010 (US)
(72) Inventor: Finney, Adam M., Rockford, IL Illinois 61114 (US); Krenz, Michael, Roscoe, IL Illinois 61073 (US)
(74) Representative: Tomlinson, Kerry John

(57) **Abstract**

A gas turbine starting architecture (10;60) is used to start a gas turbine engine having at least a first spool (14;64). The architecture includes an electric power distribution bus (46;96), a motor (40;92), a compressor (38;90), a pneumatic distribution circuit (36;98), an air turbine starter (34;86), and a first tower shaft (32;82). The motor (40;92) converts electric power provided by the electric power distribution bus (46;96) to mechanical power. In turn, the mechanical power provided by the motor (40;92) is converted to pneumatic power by the compressor (38;90) for provision to a pneumatic distribution circuit (36;88). The air turbine starter (34;86) converts pneumatic power from the pneumatic distribution circuit (36;88) to mechanical power is provided via the first tower shaft(32;82) to the at least one spool (14;64) on the gas turbine engine.

## Description

### BACKGROUND

The present invention is related to gas turbine engines, and in particular to systems for starting gas turbine engines.

Starting a gas turbine engine requires creation of a gas path through the engine to provide air into the combustion chamber. The air is mixed with fuel and ignited to create power in the form of an expanding gas, which is extracted from the engine and used to rotate the fans and compressors necessary to provide thrust and maintain the desired gas path such that the engine becomes self-sufficient.

One way of creating the desired gas path is via an air turbine starter, which converts pneumatic power to mechanical power that is used to rotate the compressors required to create the required gas path. The pneumatic power may be provided by bleed air supplied by another engine that is already running (i.e., either another main engine or an auxiliary power unit (APU)) or by a ground vehicle. Drawbacks of this approach include the air ducting required to deliver the pneumatic power to the engine.

Another way of creating the desired gas path is with an electric motor that converts electrical power to mechanical power that is used to rotate the gas turbine engine to create the required gas path. Electric power may be provided by a generator located on the vehicle, battery systems, or an external source. While this approach does not require the dedicated air ducting required by the air turbine starter, the electric generator is heavier (and therefore more expensive) than an air turbine starter.

### SUMMARY

A gas turbine start architecture for starting a gas turbine engine having at least a first spool includes an electric power distribution bus, a pneumatic power distribution circuit, a motor, a compressor, an air turbine starter, and a first tower shaft. The motor converts electric power provided via the electric power distribution bus to mechanical power. The compressor converts mechanical power provided by the motor to pneumatic power for distribution via the pneumatic power distribution circuit. The air turbine starter converts pneumatic power provided via the pneumatic power distribution circuit to mechanical power that is provided via the first tower shaft to the at least one spool on the gas turbine engine to start the engine.

### BRIEF DESCRIPTION OF THE DRAWINGS

FIG. 1 is a block diagram of a gas turbine engine starting architecture according to an embodiment of the present invention.

FIG. 2 is a block diagram of a gas turbine engine starting architecture according to another embodiment of the present invention.

### DETAILED DESCRIPTION

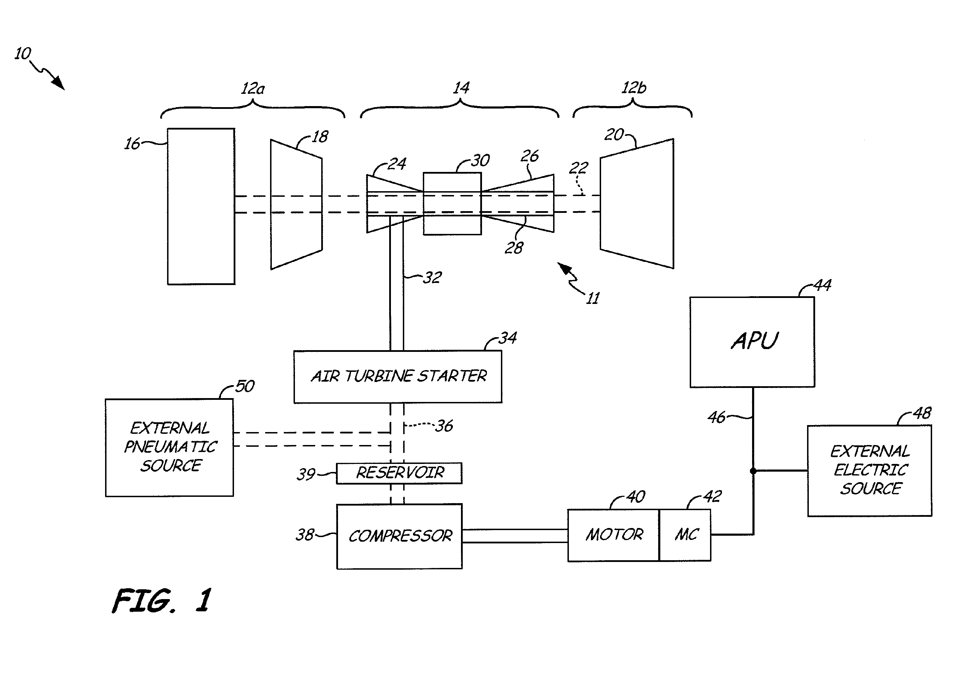

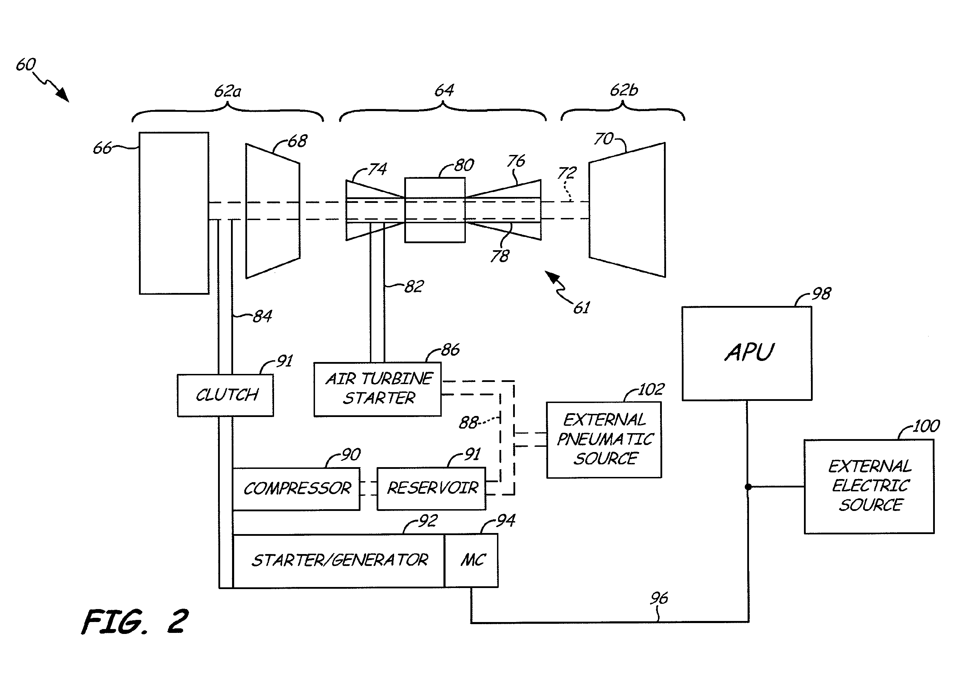

The present invention makes use of an air turbine starter to provide the mechanical energy required to start the gas turbine engine. However, rather than supply the pneumatic power required by the air turbine starter from the auxiliary power unit or from another engine, the present invention utilizes electric power provided by the APU to drive compressors local to the air turbine starter. In this way, the present architecture benefits from advantages of air turbine starters (i.e., lower weight, inexpensive) without suffering from the expense of expansive ductwork used to supply pneumatic power to the air turbine starter. Other advantages of the invention are discussed with respect to the embodiments shown in FIG. 1 and 2.

FIG. 1 is a block diagram of gas turbine engine starting architecture 10 according to an embodiment of the present invention. Gas turbine starting architecture 10 is described with respect to aircraft engine 11, which includes low-pressure (LP) spool 12 (illustrated as fore portion 12a and aft portion 12b), and high-pressure (HP) spool 14. LP spool 12 includes fan 16, LP compressor 18 and LP turbine 20, which are connected to one another via LP shaft 22. HP spool 14 includes HP compressor 24 and HP turbine 26, which are connected to one another via HP shaft 28. Combustor 30 is located between HP compressor 24 and HP turbine 26. Gas turbine starting architecture 10 further includes HP tower shaft 32, air turbine starter 34, pneumatic distribution circuit 36, compressor 38, motor 40, motor controller 42, auxiliary power unit (APU) 44, and electric distribution bus 46. Gas turbine starting architecture 10 may also receive electric power from external electric source 48 and pneumatic power from external pneumatic source 50.

To start gas turbine engine 11, a gas path must be created to force a flow of air into combustor 30, wherein the compressed air is mixed with fuel and ignited in a process referred to as "light-off". This process requires mechanical power be provided to HP spool 14 to rotate components on the spool. In particular, rotation of HP compressor 24 generates the required flow of compressed air into combustor 30, thereby creating the desired gas path through gas turbine engine 11. HP turbine 26 extracts energy from the combustor (i.e., from the expanding gas) and communicates the extracted energy via HP shaft 28 to HP compressor 24, thereby maintaining the flow of compressed air into combustor 30 such that engine 10 is self-sustaining (once started). Starting operations therefore requires HP spool 14 to be rotated as a speed sufficient to create the desired gas path.

Low-pressure spool 12 includes elements located on either side (i.e., fore and aft) of HP spool 14, including a fan 16, LP compressor 18 and LP turbine 20 connected to one another via LP shaft 22. Energy generated by combustion within aircraft engine 11 is extracted by LP turbine 20 and communicated to LP compressor 18 and fan 16 via LP shaft 22. The rotation of fan 16 creates much of the thrust for the aircraft and in addition provides bypass airflow and compliments the gas path airflow provided by HP spool 14. Components on LP spool 12 are larger (i.e., greater in diameter) than components on HP spool 14, and rotate at speeds much slower and more variable than counterparts on HP spool 14.

In the embodiment shown in FIG. 1, the mechanical power required to rotate HP spool 14 during starting operations is provided by air turbine starter 34 via HP tower shaft 32. However, pneumatic power used to drive air turbine starter 34 is not provided by bleed air from another engine, but instead relies on (electric-driven) compressor 38 to generate the desired pneumatic power. In the embodiment shown in FIG. 1, electric power is derived from either APU 44 and/or from external electric source 48 (e.g., ground power). The electric power is distributed via electric distribution bus 46 to motor controller 42 and electric motor 40. Motor controller 42 selectively applies electric power to motor 40, which converts electric power into mechanical power used to drive compressor 38. In turn, compressor 38 converts the mechanical power provided by motor 40 to pneumatic power that is supplied via pneumatic distribution circuit 36 to air turbine starter 34. In the embodiment shown in FIG. 1, pneumatic power (e.g., compressed air) is supplied to reservoir or tank 39. When providing pneumatic power to air turbine starter 34, reservoir 39 augments the pneumatic power supplied by compressor 38 with pneumatic power (i.e., compressed air) previously stored to reservoir 39 by compressor 38. In this way, sufficient pneumatic power is supplied to air turbine starter 34 while minimizing the size of the compressor required to supply the required pneumatic power. In other embodiments, the system may be implemented without the use of reservoir 39.

In addition, pneumatic power may be provided to air turbine starter 34 by external pneumatic source 50 (i.e., ground vehicle). Pneumatic power provided by external pneumatic source 50 may be provided in conjunction with or independent of pneumatic power provided by compressor 38.

Air turbine starter 34 converts pneumatic power provided by pneumatic distribution circuit 36 to mechanical power that is communicated via HP tower shaft 32 to HP spool 14. In response, HP spool 14 rotates, thereby creating the required gas path through combustor 30 to start gas turbine engine 11.

A benefit of this approach is no expensive pneumatic ductwork is required between APU 44 (typically located near the tail of the aircraft) and air turbine starter 34 (typically loaded near gas turbine engine 11 on the wing of the aircraft). In contrast, in the embodiment shown in FIG. 1, APU 44 provides electric power to components used to start gas turbine engine 11. The only pneumatic ductwork required is that between compressor 38 and air turbine starter 34, and compressor 38 can be located proximate or local to air turbine starter 34 to minimize the amount of pneumatic ductwork required. In addition, the embodiment shown in FIG. 1 allows starting operations to rely on air turbine starters, as opposed to starter/generators, which are heavier and more expensive.

FIG. 2 is a block diagram of gas turbine engine starting architecture 60 according to another embodiment of the present invention. Gas turbine starting architecture 60 is described with respect to aircraft engine 61, which includes low-pressure (LP) spool 62 (illustrated as fore portion 62a and aft portion 62b), and high-pressure (HP) spool 64. LP spool 62 includes fan 66, LP compressor 68 and LP turbine 70, all connected via LP shaft 72. HP spool 74 includes HP compressor 74 and HP turbine 76, connected via HP shaft 78. Combustor 80 is located between HP compressor 74 and HP turbine 76. Gas turbine starting architecture 60 further includes HP tower shaft 82, LP tower shaft 84, air turbine starter 86, pneumatic distribution circuit 88, compressor 90, clutch 91, starter/generator 92, motor controller 94, electric distribution bus 96, and auxiliary power unit (APU) 98. Gas turbine starting architecture 60 may additionally receive inputs from external electric source 100 and external pneumatic source 102.

As described with respect to FIG. 1, starting gas turbine engine 61 requires HP spool 74 to be rotated at a speed sufficient to create the required gas path. However, in the embodiment shown in FIG. 2, the motor (i.e., starter/generator 92) and compressor 90 used to generate the pneumatic power required by air turbine starter 86 are coupled to low-pressure tower shaft 84. This arrangement allows mechanical power to be supplied to LP spool 62 in addition to HP spool 64 during start operations. The use of starter/generator 92 also allows power to be extracted from LP spool 62 once gas turbine engine 61 has been successfully started.

In the embodiment shown in FIG. 2, electric power developed by APU 98 is communicated via electric distribution bus 96 to motor controller 94 and starter/generator 92. During start operations, starter/generator 92 is operated as a motor to convert electric energy provided by electric distribution bus 96 to mechanical energy that is communicated to compressor 90 and LP spool 62 via LP tower shaft 84. Compressor 90 converts the mechanical energy provided by starter/generator to pneumatic energy for distribution via pneumatic distribution circuit 88. Once again, in the embodiment shown in FIG. 2, pneumatic power (e.g., compressed air) is supplied to reservoir or tank 91. When providing pneumatic power to air turbine starter 86, reservoir 91 augments the pneumatic power supplied by compressor 90 with pneumatic power (i.e., compressed air) previously stored to reservoir 91 by compressor 90. In this way, sufficient pneumatic power is supplied to air turbine starter 86 while minimizing the size of the compressor required to supply the required pneumatic power. In other embodiments, the system may be implemented without the use of reservoir 91.

Air turbine starter 86 converts pneumatic energy provided by pneumatic distribution circuit 88 to mechanical energy that is supplied to HP spool 64 via HP tower shaft 82. In response, components on HP spool 64 rotate, including HP compressor 74 and HP turbine 76, creating a gas path through combustor 80 required for starting of gas turbine engine 61. Pneumatic energy provided by external pneumatic source 100 may be provided in conjunction with pneumatic power provided by compressor 88.

In the embodiment shown in FIG. 2, mechanical power provided by starter/generator 92 may additionally be provided to LP spool 62 to rotate fan 66 and LP compressor 68. The rotation of these components results in the generation of additional airflow through LP spool 62, some or all of which may be provided to HP spool 64 to compliment the airflow provided by HP spool 64 during starting operations. A benefit of providing mechanical energy to both LP spool 62 and HP spool 64 during starting operations is the airflow generated more closely resembles the airflow generated during normal operation (i.e., after successful "light-off" of gas turbine engine 61).

After successfully starting gas turbine engine 61, starter/generator 92 operates in a generator mode to extract power from LP spool 62. Mechanical power provided by LP spool 62 is communicated via LP tower shaft 84 to starter/generator 92, which converts mechanical power to electrical power fro distribution to loads (now shown) via electric power distribution bus 96. In this way, energy is extracted from LP spool 62, rather than HP spool 64. In some applications, it is beneficial to extract power from LP spool 62, rather than HP spool 64. One of the reasons for this is that extracting power from LP spool 62 does not affect the generation of the gas path required to maintain combustion within gas turbine engine 61.

In another embodiment, clutch 91 is used to selectively couple/decouple compressor 90 and starter/generator 92 from LP spool 62. For example, in one embodiment starter/generator 92 and compressor 90 are decoupled from LP spool 62 during start operations. In this way, mechanical power developed by starter/generator 92 (operated in a starter mode) is provided only to compressor 90 during start operations. Upon successful start-up of gas turbine engine 61, clutch 91 is engaged to couple starter/generator 92 to LP spool 62 to extract power from the LP spool.

A benefit of the embodiments described with respect to FIG. 2 is that, once again, no pneumatic ductwork is required between APU 98 and air turbine starter 86. While the embodiment shown in FIG. 2 includes, in addition to air turbine starter 86, starter/generator 92, a benefit of including starter/generator 92 is mechanical power for starting operations can be provided to both HP spool 64 and LP spool 62. The flow of air provided by LP spool (in particular, by fan 66 and LP compressor 68) aids in generating the gas path (i.e., airflow) developed by HP spool 64 through combustor 80. In embodiments in which clutch 91 decouples starter/generator 92 from LP spool 62, no mechanical power is provided to LP spool 62 during start operations, but power can be extracted from LP spool 62 during normal operations by coupling starter/generator 92 to LP spool 62 via LP tower shaft 84.

While the invention has been described with reference to an exemplary embodiment, it will be understood by those skilled in the art that various changes may be made and equivalents may be substituted for elements thereof without departing from the scope of the invention, which is defined by the claims. In addition, many modifications may be made to adapt a particular situation or material to the teachings of the invention without departing from the scope thereof. Therefore, it is intended that the invention not be limited to the particular embodiment disclosed, but that the invention will include all embodiments falling within the scope of the appended claims.

## Claims

1. A gas turbine start architecture (10;60) for starting a gas turbine engine having at least a first spool (14;64), the gas turbine start architecture comprising:
an electric power distribution bus (46;96) that distributes electric power provided by an electrical power source (44,48;98,100);
a motor (40;92) that converts electric power provided by the electric power distribution bus to mechanical power;
a compressor (38;90) that converts mechanical energy provided by the motor to pneumatic power;
a pneumatic distribution circuit (36;88) that distributes pneumatic power provided by the compressor;
an air turbine starter (34;86) that converts pneumatic power provided by the pneumatic distribution circuit to mechanical power; and
a first tower shaft (32;82) that communicates mechanical energy developed by the air turbine starter to the first spool to start the gas turbine engine.

2. The gas turbine start architecture of claim 1, wherein the first tower shaft is a high-pressure (HP) tower shaft (32,82) and the first spool is a high-pressure (HP) spool (14;64) , wherein the HP tower shaft communicates mechanical energy to the HP spool in a gas turbine engine that includes the HP spool and a low-pressure (LP) spool (12;62).

3. The gas turbine start architecture of claim 2, further including:
a low-pressure (LP) tower shaft (84) connected to the LP spool of the gas turbine engine, wherein the motor and the compressor are located on the LP tower shaft, wherein mechanical power developed by the motor is communicated via the LP tower shaft to the compressor and to the LP spool.

4. The gas turbine start architecture of claim 3, wherein the motor is a starter/generator (92) that converts electric power to mechanical power during a start mode and converts mechanical energy to electrical energy during a generate mode.

5. The gas turbine start architecture of claim 4, further including:
a clutch (91) connected on the LP tower shaft that selectively decouples the compressor and the starter/generator from the LP spool.

6. The gas turbine start architecture of claim 5, wherein the clutch decouples the LP tower shaft from the LP spool during start operations and couples the LP tower shaft to the LP spool during normal operation to extract energy from the LP spool via the starter/generator.

7. The gas turbine start architecture of any preceding claim, wherein the electric power distribution bus receives electric power from an auxiliary power unit (APU) (44;98) and/or an external electric power source (48;100).

8. The gas turbine start architecture of any preceding claim, further including:
a reservoir (39;91) connected to store pneumatic power provided by the compressor and to supply stored pneumatic power to the pneumatic distribution circuit.

9. The gas turbine start architecture of any preceding claim, wherein the pneumatic distribution circuit receives pneumatic power from an external pneumatic source (50;102).

10. A method of starting a gas turbine engine, the method comprising:
receiving electric power from an electric power source (44,48;98,100) for distribution via an electric power distribution bus (46;96);
providing electric power from the electric power distribution bus to a motor (40;92) that converts the electric power to mechanical power;
providing the mechanical power provided by the motor to a compressor (38;90) that converts the mechanical power to pneumatic power for distribution via a pneumatic power distribution circuit (36;86);
providing pneumatic power from the pneumatic power distribution circuit to an air turbine starter (34;82) that converts the pneumatic power to mechanical power;
communicating the mechanical power provided by the air turbine starter to the gas turbine engine for starting the gas turbine engine.

11. The method of claim 10, wherein the motor and the compressor are connected to a low-pressure (LP) tower shaft (84) that is coupled to a LP spool of the gas turbine engine, and the air turbine starter is connected to a high-pressure (HP) tower shaft (82) that is coupled to an HP spool of the gas turbine engine.

12. The method of claim 11, wherein motor is a starter/generator (92) that converts electric power to mechanical power when operating in the starter mode and converts mechanical power to electric power when operating in the generator mode.

13. The method of claim 12, further including:
decoupling the starter/generator and the compressor from the LP spool during start operations to prevent mechanical power provided by the starter/generator from being communicated to the LP spool; and
coupling the starter/generator to the LP spool during normal operations to convert mechanical power provided by the LP spool to electric power for distribution via the electric power distribution bus.
